# EUROPEAN PATENT SPECIFICATION

(11) **EP 1 406 754 B1**
(45) Date of publication and mention of the grant of the patent: **15.08.2007**
(21) Application number: 02729720.9
(22) Date of filing: 27.05.2002
(51) Int. Cl.: B29C 45/28, B29C 45/27

(54) **APPARATUS FOR INJECTION MOLDING ARTICLES**
VORRICHTUNG ZUM SPRITZGIESSEN VON KUNSTOFFGEGENSTÄNDEN
DISPOSITIF POUR LE MOULAGE D'ARTICLES PAR INJECTION

(30) Priority: 06.07.2001 US 900083
(43) Date of publication of application: 14.04.2004
(73) Proprietor: HUSKY INJECTION MOLDING SYSTEMS LTD., Bolton Ontario L7E 5S5 (CA)
(72) Inventor: NIEWELS, Joachim, Johannes, Thornton, Ontario L0L 2N0 (CA)
(74) Representative: Dearling, Bruce Clive
(86) International application number: PCT/CA2002/000774
(87) International publication number: WO 2003/004243

(56) References cited:
- US-A- 4 108 956
- US-A- 6 135 757
- US-A- 6 149 417
- US-B1- 6 220 850

## Description

This invention relates to injection molding systems. More specifically, the present invention relates to a valve gating system found in injection molding systems.

### BACKGROUND OF THE INVENTION

Injection molding nozzles are well known and are used to inject materials, such as plastic, into the cavity of a mold. For example, such nozzles receive molten material, such as plastic, from an injection molding machine and direct the same into a mold cavity through a passage called a gate. When an injection operation is complete, and prior to opening the mold cavity to eject the molded part, the transfer of molten material through the gate must be stopped. Generally, two methods exist for stopping the transfer of molten material through the gate, namely: thermal, or open, gating; and valve gating.

In thermal gating, the gate is an open aperture through which molten material passes during an injection operation. The gate is rapidly cooled at the end of the injection portion of the cycle, when the injection pressure is removed, to "freeze" the injected material into a plug. This plug remains in the gate to prevent drool of molten material from the gate when the mold is open for the ejection of the molded part. In the next injection portion of the cycle, the cooling applied to the gate is removed and hot molten material from the injection molding machine pushes the plug into the mold cavity, where it melts and mixes with the newly provided molten material.

In valve gating, the opening and closing of the gate is independent of injection pressure and/or cooling and is achieved mechanically with a valve stem. This stem can be moved between an open position, wherein flow of molten materials through the gate is permitted, and a closed position wherein the gate is closed by entry of the valve stem into the gate which establishes a seal, preventing molten materials from passing through the gate. Valve gating is well known and examples of such systems are shown in U.S. Pat. Nos. 2, 878, 515; 3, 023, 458; and 3, 530, 539.

U.S. Pat. No. 4,108,956 to Soo-I1 Lee describes a mold cavity having a supply of flowable material for flowing through a nozzle gate of an injection nozzle.

Generally, for situations that require improved aesthetics, valve gating is preferable to thermal gating because it can reduce the undesired gate vestige which results on the finished molded part. However, there are problems with valve gating systems.

Specifically, the valve stem and gate each have a complementary sealing portion which are brought into contact to seal the gate. Typically there is a .001-.002 inches (0.0254-0.0508 millimetres) diametrical clearance between the valve stem and the gate sealing portion. As the valve stem is moved into alignment with the sealing portion of the gate to effect sealing, a slight misalignment of the stem with the gate will cause the stem to strike the gate sealing portion. Over time, this will cause the gate area to wear and become misshapen. Now that the gate sealing area is worn, the stem no longer stops the flow of molten material and a small amount of molten material will migrate between the stem and the worn gate sealing area. This leakage adversely impacts the vestige quality because as the mold is opened, the now solidified material between the gate and the valve stem will cause a tear or blemish to form along the vestige of the part, and in extreme cases, the tearing can propagate to the surface of the molded article or preform.

Following the injection cycle, typically the mold halves will open and the molded article in a somewhat solidified state will be removed from the area of the stem/gate area. Due to the entrapped molten material between the worn gate area and the stem, the molded article will not break away cleanly when the mold is opened, but rather will tear away from the gate area, which results in a blemished vestige on the molded article.

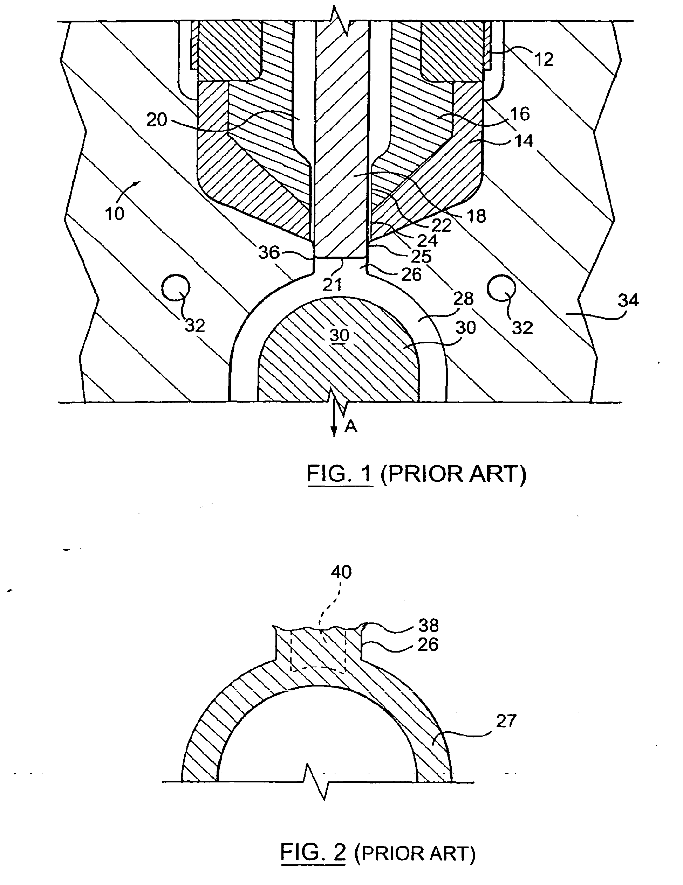

Referring to FIG. 1 and 2 this phenomenon can be clearly seen. As well known in the art, a nozzle assembly 10 is comprised of an elongated nozzle bushing 12 with a nozzle tip 16 affixed co-axially therein. Optionally, an insulator 14 is affixed to a proximal end of the nozzle tip 16 thereby thermally insulating the heated nozzle assembly 10 from the cooled cavity plate 34. A movable valve member 18 extends co-axially in the nozzle assembly 10 and is selectably positioned in or out of a passageway/gate area 22. A melt channel 20 surrounds the valve member 18 and runs the length of the nozzle assembly 10 to communicate a flowable material to a mold cavity 28. When the valve member 18 is placed in a fully closed position (as shown in FIG. 1), a sealing portion 25 in the cavity plate 34 sealingly surrounds the valve member 18 to shut off the flow of material to the mold cavity 28. As shown in FIG. 1, a face portion 21 of valve member 18 defines the entire top of a vestige forming portion 35 of the mold cavity. A chamfer 36 is typically provided along the face of the valve member 18 to help guide the valve member into the gate area and reduce wear of the valve member and cavity plate 34.

Due to the close fit of the valve member 18 to the sealing portion 25, any misalignment that exists between their respective interfaces will cause the valve member 18 to strike the surface of the sealing portion 25 which will ultimately lead to a deterioration of the seal portion 25 and/or the valve member 18.

At the end of the injection cycle, the valve member 18 is moved into its closed position as previously described and the mold cavity is held in a closed position with a core 30 for a predetermined cycle time to allow the molten material to cool and solidify, thereby forming the molded article. Once the molded article has been allowed to cool to a sufficient level, the core 30 with the molded article thereon is moved in the direction as denoted by arrow A, and the vestige 26, as shown in FIG. 2, is pulled away from the face portion 21 of the valve member 18. If enough wear exists between the valve member 18 and the sealing portion 25, a small amount of molten material will migrate therein, and as the mold core 30 and the molded article 27 are moved to an open position, a peeled edge 38 will form on the vestige 26 of the molded article 27.

Also, as the valve member 18 is in the flow of molten material when the gate is open, it can become quite hot. When the gate is closed by the valve member 18, the hot tip of the valve member 18 can be difficult to cool as the mold cavity 28 is cooled and this can result in a need for increased cycle times to permit the necessary cooling, and/or can result in undesirable characteristics in the molded article 27. Specifically, as the material in the mold cavity 28 adjacent the valve member 18 is cooled less efficiently due to the hot tip, parts molded from thermally sensitive materials such as PET can suffer from an enlarged area of crystallinity 40 or other undesired characteristics. In addition, since the entire top surface of the vestige 26 is in contact with the face portion 21 of the hot valve member 18, the molten material adjacent the face portion 21 remains somewhat molten and stringing and an uneven edge forms when the mold is opened.

Configuring a replaceable insert adjacent a gate vestige forming portion in a molding stack is known. However, known configurations do not address the problems of gate tear. In particular, United States Patent 4,286,941 describes a nozzle seal for valve-gated injection molding. A hollow nozzle seal is seated in a nozzle portion of a heater cast and extends across the insulative air gap and into a gate aperture in the cavity plate. United States Patent 6,220,850 describes an injection molding stack assembly including a mold gate insert that is formed in two pieces. In particular, a first portion of the insert forms a gate land for valve gated machines, and can thermally shield the nozzle tip. United States Patent 6,135,757 describes a valve gated injection molding system and valve gate reduces the formation of gate vestiges on parts molded therewith and enhances cooling of the tip of the valve stem during the cooling portion of an injection molding cycle. In particular, channels are provided and extend from an area adjacent the contact area of the sealing portions of the stem tip and gate to the melt channel of the injection nozzle.

Therefore there is a need for an improved injection-molding machine with a valve gate system that reduces or obviates some or all of the drawbacks of the prior art.

### SUMMARY OF THE INVENTION

The primary objective of the present invention is to provide an improved injection molding system with a valve gating system that reduces or obviates the drawbacks of the prior art.

Another object of the present invention is to provide an insert that interfaces with a valve member in an injection molding system that reduces or eliminates the formation of peeled edges along a vestige of a molded article.

Yet another object of the present invention is to provide a gate insert in the mold plate adjacent the valve member that may be easily replaced.

The foregoing objects are achieved by providing a mold cavity with a vestige having a top planar portion with a cross-sectional area that is larger than the cross-sectional area of the valve member so that the periphery of the vestige is cooled quicker than the interior portion of the vestige. A replaceable insert is provided to help guide the valve member into a sealing position with the gate. Replacement of this insert can easily be performed whenever the wear of the insert reaches a predetermined and unacceptable level.

Therefore, in accordance with a first aspect of the present invention there is provided an injection molding apparatus having: a mold with a mold cavity defining a molded article to be formed, the mold cavity including a vestige forming portion; and a nozzle assembly having a melt channel for communicating a flowable material to said mold cavity, the nozzle assembly having a moveable valve member within the melt channel to selectively start and stop the communication of said flowable material through the nozzle, the valve member having a face portion with a first cross-sectional area; a replaceable insert installed in the mold adjacent and in abutting enagement with the mold cavity, the replaceable insert having a passageway that connects the melt channel of the nozzle assembly with the mold cavity, the passageway having a sealing portion adjacent the mold cavity for receiving an end portion of the valve member to stop the communication of flowable material to the mold cavity; characterized in that the vestige forming portion of the cavity, located adjacent the replaceable insert, causes the formation of a gate vestige in the molded article that protrudes therefrom, the gate vestige having a substantially flat end surface whose diameter is greater than that of the valve member resulting in a cross-sectional area of the end of the gate vestige being larger than the first cross-sectional area of the face portion of the valve member, the vestige forming portion causing the gate vestige to form in contact with both the face portion of the valve member and the replaceable insert.

In a second aspect of the present invention there is provided an injection molding apparatus having: a mold with a mold cavity defining a molded article to be formed, the mold cavity including a protruding vestige forming portion with a sealing surface; and a nozzle assembly having a melt channel for communicating a flowable material to said mold cavity, the nozzle assembly having a moveable valve member within the melt channel to selectively start and stop the communication of said flowable material through the nozzle, the valve member having an end portion arranged to selectively abut against the sealing surface of the vestige forming portion to stop the communication of flowable material to the mold cavity, the valve member further having an end face portion with a first cross-sectional area; characterized in that the vestige forming portion of the cavity causes the formation of a gate vestige that protrudes from the molded article, the gate vestige having a substantially flat end surface whose diameter is greater than that of the valve member resulting in a cross-sectional area of the end of the gate vestige being larger than the surface area of the end face portion of the valve member, the vestige forming portion causing the gate vestige to form in contact with both the face portion of the valve member and the vestige forming portion.

### BRIEF DESCRIPTION OF THE DRAWINGS

FIG. 1 is a simplified cross-sectional view of an injection molding nozzle in accordance with the prior art;
FIG. 2 is a partial cross-sectional view of a molded article in accordance with the prior art;
FIG. 3 and 3a are simplified cross-sectional views of exemplicative embodiments in accordance with the present invention;
FIG. 4a and 4b are partial cross-sectional views of alternate exemplicative embodiments in accordance with the present invention;
FIG. 5 is a simplified partial cross-sectional view of a molded article.

### DETAILED DESCRIPTION OF THE PREFERRED EMBODIMENT(S)

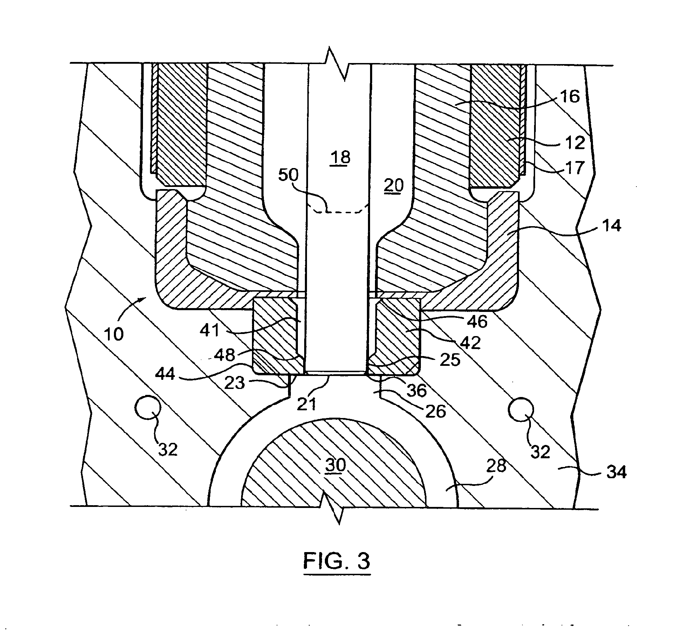

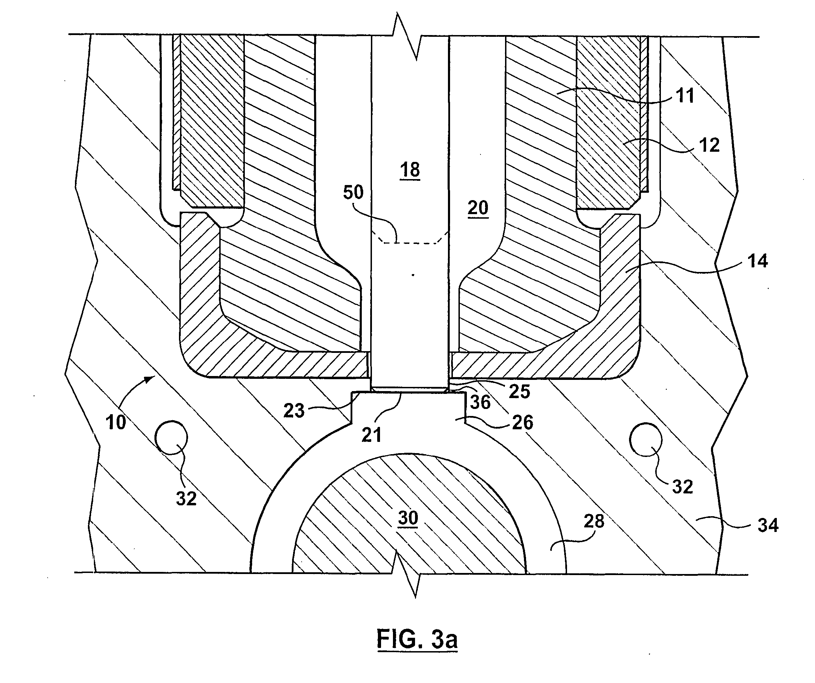

Referring now to FIG. 3, an injection molding nozzle assembly 10 in accordance with the present invention is located in a cavity plate 34 for the communication of a flowable material to a mold cavity 28 for the formation of a molded article therein. Cavity plate 34 is provided with a plurality of cooling passageways 32 therein for the communication of a cooling fluid for the removal of heat from the cavity plate to cool and solidify the flowable material in the mold cavity 28.

The nozzle assembly 10, as well known in the art, is comprised of an elongated nozzle bushing 12 with a nozzle tip 16 affixed to a proximal end of the nozzle bushing. In a preferred embodiment, the nozzle tip 16 is threaded to the nozzle bushing 12, but any such suitable means could be used. Typically, a heater 17 is wrapped around the nozzle assembly 10 to maintain the flowable material in a viscous state. In the preferred embodiment an optional insulator 14 is located between the nozzle tip 16 and the cooled cavity plate 34 to reduce the transfer of heat from the hot nozzle tip 16 to the cooled cavity plate 34. Located co-axially in the nozzle assembly 10 is a movable valve member 18 that extends into a sealing portion 25 adjacent a vestige forming portion 35 of the mold cavity 28. In a preferred embodiment, the valve member 18 is a slender elongated cylindrical piece that is moved up and down to an open and closed position respectively. When the valve member 18 is in the open position as shown by phantom line 50, the flowable material in melt channel 20 is allowed to enter the mold cavity 28. When placed in the closed position, as shown in FIG. 1, the valve member 18 is in sealing communication with a sealing portion 25 thereby stopping the flow of material to the mold cavity 28.

In one preferred embodiment, an insert 42 with a passageway 41 formed therein is placed in a cavity 44 located in the cavity plate 34 in alignment with the valve member 18. In this arrangement, the sealing portion 25 is located in this replaceable insert 42 to allow for easy maintenance when leakage around the valve member 18 starts to occur.

The insert 42 may optionally provide a first chamfer 46 to help guide the valve member 18 when it first enters the passageway 41 and a second chamfer 48 to help guide the valve member further into the sealing portion 25. These chamfers act to reduce wear on both the valve member 18 and the insert 42 and prolong the useable life of both components.

The vestige 26, as shown in the figures, has a cross-sectional area larger than the face portion 21 of the valve member 18. As such, a portion 23 of the vestige 26 is in thermal communication with the insert 42. Given that the insert 42 is placed in the cooled cavity plate 34, the insert 42 will cool the portion of the molded article vestige 26 in contact with portion 23 faster than the portion in contact with face portion 21 of the hot valve member 18. This differential cooling action will allow the portion of the molded article vestige 26 in contact with portion 23 to solidify before the area adjacent face portion 21. When core 30 is retracted to remove the molded article from the mold cavity 28, this now solidified portion 23 will tend to breakaway more cleanly than the prior art. In addition, due to the location of the sealing portion 25 being internal and displaced from the outer surface of the finished vestige 26, any tearing that may occur when the mold is opened is reduced or eliminated because the tear is not on the surface of the vestige/preform as in the prior art.

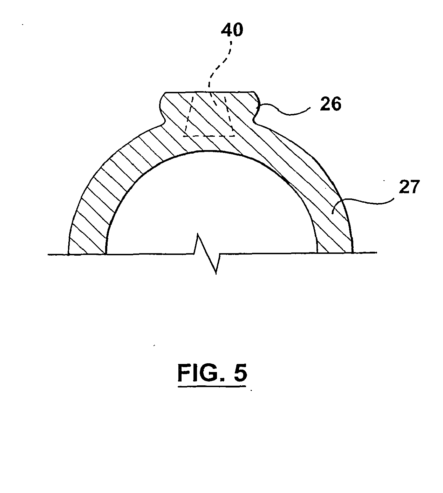

As shown in FIG. 5, this clean break will result in a more uniform and flat vestige 26 than previously seen. In addition, a reduced area of crystallinity 40 will form inside the molded article 27 due to the improved cooling of the vestige 26.

Referring to FIG. 3A, an alternative embodiment in accordance with the present invention is shown which is identical to the embodiment in FIG. 3 except for the removal of the insert 42. As shown in FIG. 3A, the sealing portion 25 is now located in the cavity plate 34. Cooling of portion 23 will still occur quicker than in the remainder of the vestige 26, which will allow for a substantially clean break when mold core 30 is retracted.

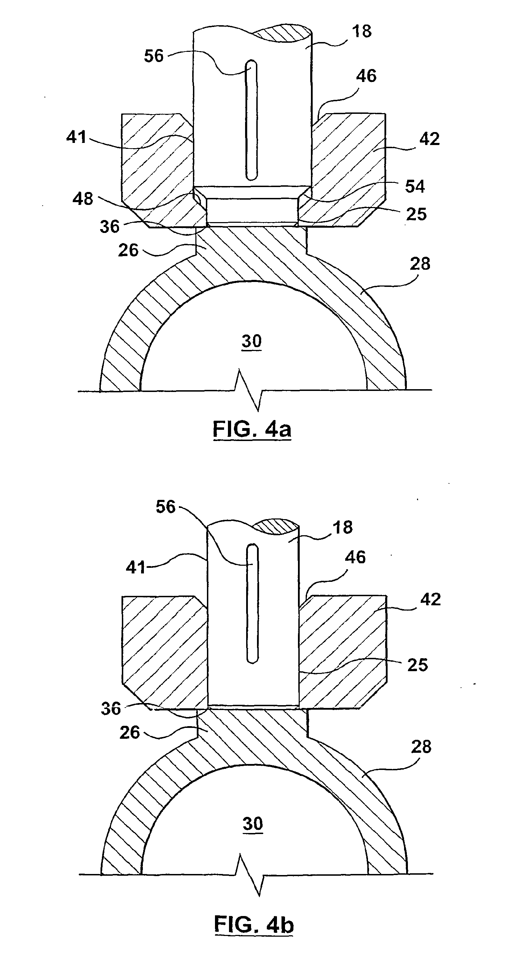

FIG. 4a and 4b (where like features have like numerals) show alternative embodiments of the insert 42 and the valve member 18. As shown in FIG. 4a, the valve member 18 has a chamfer 54 near the vestige 26. A reduced diameter section of the valve member is in sealing communication with the sealing portion 25 when in the closed position. At least one elongated recess 56 is formed in the surface of the valve member 18 which allows the flowable material to be forced up along the valve member 18 as the valve member is brought to the closed position. Chamfers 46 and 48 help guide the valve member 18 as it enters the passageway 41 and seats in the sealing portion 25. FIG. 4b shows the valve member 18 as one continuous cylinder down to the chamfer at the very bottom. The passageway 41 in the insert 42 is also a uniform diameter for most of its length, except for the lead in chamfer 46. In this embodiment, the sealing portion 25 can be longer and provide a longer lasting seal. The recess 56 allows the flowable material to flow up out of passageway 41 as the valve member 18 is brought to a closed position.

## Claims

1. An injection molding apparatus having:
a mold with a mold cavity (28) defining a molded article to be formed, the mold cavity (28) including a vestige forming portion; and
a nozzle assembly (10) having a melt channel for communicating a flowable material to said mold cavity (28), the nozzle assembly (10) having a moveable valve member (18) within the melt channel to selectively start and stop the communication of said flowable material through the nozzle (10), the valve member having a face portion with a first cross-sectional area;
a replaceable insert (42) installed in the mold adjacent and in abutting enagement with the mold cavity (28), the replaceable insert (42) having a passageway (41) that connects the melt channel (20) of the nozzle assembly (10) with the mold cavity (28), the passageway (41) having a sealing portion (25) adjacent the mold cavity (28) for receiving an end portion of the valve member (18) to stop the communication of flowable material to the mold cavity (28);
whereby the vestige forming portion of the cavity, located adjacent the replaceable insert (42), causes the formation of a gate vestige in the molded article that protrudes therefrom the gate vestige having a substantially flat end surface, the vestige forming portion causing the gate vestige to form in contact with both the face portion of the valve member (18) and the replaceable insert (42) **charaterized in that** the flat end surface has a diameter greater than that of the valve member resulting in a cross-sectional area of the end of the gate vestige being larger than the first cross-sectional area of the face portion (21) of the valve member (18).

2. The apparatus of claim 1, wherein a cross-section through the vestige forming portion has a profile therefor in which two parallel sides abut against the replaceable insert (42) on either side of the valve member (18).

3. The apparatus of claim 1, wherein the passageway (41) has first portion and a second portion, the second portion being the sealing portion (25).

4. The apparatus of claim 3, wherein the first portion has a substantial clearance with the valve member (18).

5. The apparatus of claim 1, wherein the nozzle assembly (10) is configured to allow the flowable material in the passageway (41), in use, to be forced up along the valve member (18) as the valve member (18) is brought to the closed position.

6. The apparatus of claim 5, wherein the valve member (18) includes at least one recess (56) on an outside surface.

7. An injection molding apparatus having:
a mold with a mold cavity (28) defining a molded article to be formed, the mold cavity (28) including a protruding vestige forming portion with a sealing surface (25); and
a nozzle assembly (10) having a melt channel for communicating a flowable material to said mold cavity (28), the nozzle assembly (10) having a moveable valve member (18) within the melt channel to selectively start and stop the communication of said flowable material through the nozzle (10), the valve member having an end portion arranged to selectively abut against the sealing surface of the vestige forming portion to stop the communication of flowable material to the mold cavity (28), the valve member further having an end face portion with a first cross-sectional area;
**characterized in that** the vestige forming portion of the cavity causes the formation of a gate vestige that protrudes from the molded article, the gate vestige having a substantially flat end surface the vestige forming portion causing the gate vestige to form in contact with both the face portion of the valve member (18) and the vestige forming portion, **characterized in that** the flat end surface has a diameter greater than that of the valve member resulting in a cross-sectional area of the end of the gate vestige being larger than the surface area of the end face portion (21) of the valve member (18).

## Patentansprüche

1. Spritzgießvorrichtung mit:
einer Form mit einem Formhohlraum (28), der einen zu formenden Formungsgegenstand definiert, wobei der Formhohlraum (28) einen Formungsteil für ein sichtbares Merkmal aufweist; und
einer Düsenanordnung (10) mit einem Schmelzenkanal zum Zuführen von fließfähigem Material in den Formhohlraum (28), wobei die Düsenanordnung (10) ein bewegliches Ventilelement (18) innerhalb des Schmelzenkanals aufweist, um den Durchfluß des fließfähigen Materials durch die Düse (10) selektiv zu starten und zu stoppen, wobei das Ventilelement einen Stirnteil mit einer ersten Querschnittsfläche hat;
einem austauschbaren Einsatz (42), der in der Form nahe und in Anlage am Formhohlraum (28) installiert ist, wobei der austauschbare Einsatz (42) einen Durchgang (41) aufweist, welcher den Schmelzenkanal (20) der Düsenanordnung (10) mit dem Formhohlraum (28) in Verbindung setzt, wobei der Durchgang (41) einen Dichtungsabschnitt (25) nahe dem Formhohlraum (28) aufweist, um einen Endteil des Ventilelementes (18) aufzunehmen, um den Fluß des fließfähigen Materials zu dem Formhohlraum (28) zu stoppen;
wobei der das sichtbare Merkmal formende Teil des Hohlraumes, der dem austauschbaren Einsatz (42) benachbart angeordnet ist, die Bildung eines Angußansatzes an dem geformten Gegenstand bewirkt, welcher von diesem absteht, wobei der Angußansatz eine im wesentlichen flache Endfläche hat, und der das sichtbare Merkmal formende Teil bewirkt, daß der Angußansatz sowohl in Kontakt mit dem Stirnteil des Ventilelementes (18) als auch dem austauschbaren Einsatz (42) geformt wird, **dadurch gekennzeichnet, daß** die flache Endfläche einen Durchmesser hat, der größer als jener des Ventilelementes ist, so daß sich eine Querschnittsfläche des Endes des Angußansatzes ergibt, die größer als die erste Querschnittsfläche des Stirnteiles (21) des Ventilelementes (18) ist.

2. Vorrichtung nach Anspruch 1, bei welcher der Querschnitt durch den den Angußansatz bildenden Teil ein Profil hat, von dem zwei parallele Seiten an dem austauschbaren Einsatz (42) auf beiden Seiten des Ventilelementes (18) angreifen.

3. Vorrichtung nach Anspruch 1, bei welcher der Durchgang (41) einen ersten Abschnitt und einen zweiten Abschnitt hat, wobei der zweite Abschnitt der Dichtungsabschnitt (25) ist.

4. Vorrichtung nach Anspruch 3, bei welcher der erste Abschnitt ein wesentliches Spiel zu dem Ventilelement (18) hat.

5. Vorrichtung nach Anspruch 1, bei welcher die Düsenanordnung (10) so konfiguriert ist, daß sie im Betrieb gestattet, daß das fließfähige Material in dem Durchgang (41) entlang des Ventilelementes (18) nach oben gedrückt wird, wenn das Ventilelement (18) in die Schließstellung gebracht wird.

6. Vorrichtung nach Anspruch 5, bei welcher das Ventilelement (18) zumindest einen Rücksprung (56) an seiner Außenfläche aufweist.

7. Spritzgießvorrichtung mit:
einer Form mit einem Formhohlraum (28), der einen zu formenden Formungsgegenstand definiert, wobei der Formhohlraum (28) einen vorstehenden Angußansatz mit einer Dichtungsfläche (25) aufweist; und
einer Düsenanordnung (10) mit einem Schmelzenkanal, um fließfähiges Material dem Formhohlraum (28) zuzuführen, wobei die Düsenanordnung (10) ein bewegbares Ventilelement (18) innerhalb des Schmelzenkanals aufweist, um den Durchfluß des fließfähigen Materials durch die Düse zu starten und zu stoppen, wobei das Ventilelement einen Endabschnitt hat, der so ausgebildet ist, daß er an der Dichtungsfläche des den Angußansatz bildenden Teiles selektiv angreift, um den Durchfluß des fließfähigen Materials zum Formhohlraum (28) zu stoppen, wobei das Ventilelement ferner einen Endflächenabschnitt mit einer ersten Querschnittsfläche aufweist;
**dadurch gekennzeichnet, daß** der den Angußansatz formende Teil des Formhohlraumes bewirkt, daß ein von dem geformten Gegenstand vorstehender Angußansatz gebildet wird, wobei dieser Angußansatz eine im wesentlichen flache Endfläche hat, und der den Angußansatz formende Teil bewirkt, daß der Angußansatz sowohl in Kontakt mit der Endfläche des Ventilelementes (18) als auch dem den Angußansatz formenden Teil geformt wird, **dadurch gekennzeichnet, daß** die flache Endfläche einen Durchmesser hat, der größer als jener des Ventilelementes ist, so daß sich eine Querschnittsfläche des Endes des Angußansatzes ergibt, die größer als die Oberfläche des Stirnteiles (21) des Ventilelementes (18) ist.

## Revendications

1. Appareil de moulage par injection présentant :
un moule doté d'une cavité de moule (28) définissant un article moulé à former, la cavité de moule (28) comportant une partie formant vestige ; et
un ensemble de buse (10) présentant un canal de coulée destiné à transférer un matériau liquide vers ladite cavité de moule (28), l'ensemble de buse (10) présentant un élément formant soupape mobile (18) à l'intérieur du canal de coulée pour démarrer et arrêter de manière sélective le transfert dudit matériau liquide à travers la buse (10), l'élément formant soupape présentant une partie de face dotée d'une première superficie de section ;
un insert remplaçable (42) installé dans le moule de manière adjacente et en prise de butée avec la cavité de moule (28), l'insert remplaçable (42) présentant un passage (41) qui raccorde le canal de coulée (20) de l'ensemble de buse (10) à la cavité de moule (28), le passage (41) présentant une partie d'étanchéité (25) adjacente à la cavité de moule (28) destinée à recevoir une partie d'extrémité de l'élément formant soupape (18) pour arrêter le transfert du matériau liquide vers la cavité de moule (28) ;
la partie formant vestige de la cavité, située de manière adjacente à l'insert remplaçable (42), provoquant la formation d'un vestige de pont dans l'article moulé qui dépasse de celui-ci, le vestige de pont présentant une surface d'extrémité sensiblement plate, la partie formant vestige amenant le vestige de pont à se former en contact avec à la fois la partie de face de l'élément formant soupape (18) et l'insert remplaçable (42), **caractérisé en ce que** la surface d'extrémité plate présente un diamètre supérieur à celui de l'élément formant soupape, ce qui a pour résultat qu'une superficie de section de l'extrémité du vestige de pont est supérieure à la première superficie de section de la partie de face (21) de l'élément formant soupape (18).

2. Appareil selon la revendication 1, dans lequel une coupe transversale à travers la partie formant vestige présente par conséquent un profil dans lequel deux côtés parallèles sont en butée contre l'insert remplaçable (42) sur chaque côté de l'élément formant soupape (18).

3. Appareil selon la revendication 1, dans lequel le passage (41) présente une première partie et une seconde partie, la seconde partie étant la partie d'étanchéité (25).

4. Appareil selon la revendication 3, dans lequel la première partie présente un espace substantiel avec l'élément formant soupape (18).

5. Appareil selon la revendication 1, dans lequel l'ensemble de buse (10) est configuré pour permettre au matériau liquide dans le passage (41), à l'utilisation, d'être poussé vers le haut le long de l'élément formant soupape (18) lorsque l'élément formant soupape (18) est amené dans la position fermée.

6. Appareil selon la revendication 5, dans lequel l'élément formant soupape (18) comporte au moins un évidement (56) sur une surface extérieure.

7. Appareil de moulage par injection présentant :
un moule doté d'une cavité de moule (28) définissant un article moulé à former, la cavité de moule (28) comportant une partie formant vestige dotée d'une surface d'étanchéité (25) ; et
un ensemble de buse (10) présentant un canal de coulée destiné à transférer un matériau liquide vers ladite cavité de moule (28), l'ensemble de buses (10) présentant un élément formant soupape mobile (18) à l'intérieur du canal de coulée pour démarrer et arrêter de manière sélective le transfert dudit matériau liquide à travers la buse (10), l'élément formant soupape présentant une partie de face d'extrémité agencée pour être sélectivement en butée contre la surface d'étanchéité de la partie formant vestige pour arrêter le transfert du matériau liquide vers la cavité de moule (28), l'élément formant soupape présentant en outre une partie de face dotée d'une première superficie de section ;
**caractérisé en ce que** la partie formant vestige de la cavité provoque la formation d'un vestige de pont qui dépasse de l'article moulé, le vestige de pont présentant une surface d'extrémité sensiblement plate, la partie formant vestige amenant le vestige de pont à se former en contact avec à la fois la partie de face de l'élément formant soupape (18) et la partie formant vestige, **caractérisé en ce que** la surface d'extrémité plate présente un diamètre supérieur à celui de l'élément formant soupape, ce qui a pour résultat qu'une superficie de section de l'extrémité du vestige de pont est supérieure à la superficie de section de la partie de face d'extrémité (21) de l'élément formant soupape (18).
